# EUROPEAN PATENT APPLICATION

(11) **EP 4 670 843 A1**
(43) Date of publication of application: **31.12.2025**
(21) Application number: 24184363.0
(22) Date of filing: 25.06.2024
(51) Int. Cl.: B01L 3/00, B03C 5/00, B03C 5/02

(54) **MODULE FOR SEPARATING AN ANALYTE FROM A CONTAMINANT**

(71) Applicant: Imec VZW, 3001 Leuven (BE)
(72) Inventor: WILLEMS, Kherim, 3051 Sint-Joris-Weert (BE); FATEMI, Naghmeh, 3051 Oud-Herverlee (BE)
(74) Representative: Winger

(57) **Abstract**

In a first aspect, the present invention relates to a module (5) for separating an analyte (201) from a contaminant (202), comprising: i) a fluidic channel (31) for flowing therethrough a liquid comprising the analyte (201) and the contaminant (202); ii) a plurality of capture sites (71) in the fluidic channel (31); and iii) a plurality of electrodes (43, 44) arranged near the capture sites (71), such that by operating the electrodes (43, 44) both an attractive force and a repulsive force acting on a target particle (20) can be realized, the attractive force and/or repulsive force being tuneable so that the forces acting on the target particle (20) create a local potential minimum at one of the capture sites (71), thereby capturing the target particle (20) at said capture site, the target particle (20) being either the analyte (201) or the contaminant (202).

## Description

### Technical field of the invention

The present invention relates to manipulating target particles in a liquid and in particular to modules for separating an analyte from a contaminant-either of them being the target particles-by capturing said target particles from the liquid.

### Background of the invention

In the life sciences industry, the ability to sample, sort, separate, characterize, and quantify the contents of a mixture-such as a particular (set of) molecule(s) (*e.g.*, proteins or biomarkers) from a complex mixture (*e.g.*, urine, blood or a bioreactor sample)-is essential for a variety of applications. These applications can for instance range from the quantification of biomarkers in blood, over determining the number of aggregates in a protein solution, to validating the purity of a viral vector production in gene therapy. Furthermore, for vaccine and drug delivery applications using nanoparticles (*e.g.*, viral vectors or lipid vesicles), validating the size distribution and particle content of the synthesized cargo is crucial for determining good manufacturing practices (GMP) and obtaining regulatory approval.

However, a major challenge in current biomolecule manufacturing (*e.g*., in particular for recombinant viral vectors and lipid-based nanoparticles) is that impurities often have highly similar composition and physicochemical properties compared to the desired (*e.g*., therapeutic) biomolecules. Traditional purification techniques-which typically rely on separating based on a single property like charge, size or hydrophobicity-are therefore inadequate for effectively removing such impurities. This issue may typically present itself in two ways: high-yield processes struggle with selectively removing rare undesirable biomolecules, while low-yield processes have difficulty selectively concentrating the rare desirable therapeutic agents.

Another issue is that production, purification and analysis are often performed using multiple disconnected tools and systems. This requires extensive product handling and sampling, increasing contamination and error risks while also driving up manufacturing costs and time.

There is thus still a need in the art for solutions which address at least some of the concerns outlined above.

### Summary of the invention

It is an object of the present invention to provide good modules for separating an analyte from a contaminant, either of them being target particles to be captured by the module. It is a further object of the present invention to provide good systems and methods associated therewith. This objective is accomplished by modules, systems and methods according to the present invention.

It is an advantage of embodiments of the present invention that a capture site can be tuned (*e.g.*, through its manufacture and/or its operation) to a particular species of target particles. It is a further advantage of embodiments of the present invention that a target particle can be captured selectively with respect to a further compound (*e.g.*, an analyte or a contaminant).

It is an advantage of embodiments of the present invention that virtually any species of target particles can be targeted for capture.

It is an advantage of embodiments of the present invention that a system may be manufactured in a more or less universal way (e.g., not purpose-build for a specific application), but can be configured towards a particular application through the modules it comprises and/or the manner in which it is operated. It is a further advantage of embodiments of the present invention that a system used for one application can be relatively easily reconfigured towards another application.

It is an advantage of embodiments of the present invention that the forces (e.g., electric and/or hydrodynamic forces) acting on the target particle can be modulated.

It is an advantage of embodiments of the present invention that complex (e.g., multipole) electric fields can be generated, thereby allowing to induce effects such as electrorotation. It is a further advantage of embodiments of the present invention that still further forces and/or effects-such as electrophoretic and electro-osmotic forces-may be leveraged.

It is an advantage of embodiments of the present invention that capture devices can be highly parallelized/multiplexed within a single module and/or system. It is a further advantage of embodiments of the present invention that the module and/or system can comprise a plurality of capture sites tuned towards different target particles, allowing for the efficient capturing of various types of target particles in a single module/system.

It is an advantage of embodiments of the present invention that target particles can be captured from complex mixtures, such as a urine, blood or a bioreactor samples.

It is an advantage of embodiments of the present invention that captured target particles can be detected, analysed and/or separated from the liquid.

It is an advantage of embodiments of the present invention that the electrodes can be protected from chemical (e.g., corrosion) and physical (e.g., delamination) damage.

It is an advantage of embodiments of the present invention that the system can be fabricated in a relatively easy and economical manner. It is a further advantage of embodiments of the present invention that they can be implemented with standard technologies which are commonly used in the field.

It is an advantage of embodiments of the present invention that the solutions can be used in various application areas, for many of which a reliable, non-destructive method to characterize certain analytes of interest is currently lacking; especially in the form of an integrated all-in-one system.

In order to meet the above objective, the separation modules in accordance with the present invention are especially suitable for (e.g., adapted to) being integrated in a system together with other modules (e.g., one or more production, further separation or analysis modules). Such a modular system advantageously allows to provide a complete and integrated all-in-one solution, starting from reagents and taking them-for instance-through synthesis, purification and analysis to eventually output the desired analyte (e.g., biomolecule).

In a first aspect, the present invention relates to a module for separating an analyte from a contaminant, comprising: i) a fluidic channel for flowing therethrough a liquid comprising the analyte and the contaminant; ii) a plurality of capture sites in the fluidic channel; and iii) a plurality of electrodes arranged near the capture sites, such that by operating the electrodes both an attractive force and a repulsive force acting on a target particle can be realized, the attractive force and/or repulsive force being tuneable so that the forces acting on the target particle create a local potential minimum at one of the capture sites, thereby capturing the target particle at said capture site, the target particle being either the analyte or the contaminant.

In a second aspect, the present invention relates to a system comprising a plurality of fluidically and/or electronically coupled modules, at least one of said modules being a module according to any embodiment of the first aspect.

In a third aspect, the present invention relates to a method for separating an analyte from a contaminant, the method comprising: a) flowing a liquid comprising the analyte and the contaminant through the fluidic channel of a module as defined in any embodiments of the first aspect; and b) operating the plurality of electrodes so as to realize both the attractive force and the repulsive force acting on the target particle, and tune the attractive force and/or repulsive force so that the forces acting on the target particle create a local potential minimum at one of the capture sites, thereby capturing the target particle at said capture site, wherein the target particle is either the analyte or the contaminant.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 is a graph of a particle's potential energy in function of its distance in accordance with embodiments of the present invention, also schematically showing the particle being pulled into the local potential minimum.
FIG 2 schematically depicts a modular system in accordance with an exemplary embodiment of the present invention.
FIG 3 is a schematic view of a module in accordance with an exemplary embodiment of the present invention.
FIG 4 is a cross-sectional view (perpendicular to the flow direction) of a fluidic channel in accordance with an exemplary embodiment of the present invention.
FIG 5, FIG 6 and FIG 7 are schematic views of different stages in a first way to use a module in accordance with an exemplary embodiment of the present invention.
FIG 8, FIG 9 and FIG 10 are schematic views of different stages in a second way to use a module in accordance with an exemplary embodiment of the present invention.
FIG 11 schematically depicts a capture device in a module in accordance with an exemplary embodiment of the present invention.
FIG 12 schematically depicts a further capture device comprising a through-hole in accordance with another exemplary embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, the term 'analyte' refers to a substance (*e.g.*, a particle) that is of interest. Typically, the analyte is desired to be separated, detected, measured, analysed, etc. Examples of analytes include, but are not limited to, biomolecules, macromolecules, small molecules and ionic species. In some embodiments, the analyte may be an intermediate product, being an intermediary towards a final product that is to be formed in the (*e.g.*, modular) system.

As used herein, and unless otherwise specified, the term `biomolecules' refers to molecules that are derived from or are involved in biological processes. Examples of biomolecules include, but are not limited to, proteins, enzymes, antibodies, nucleic acids (such as DNA or RNA), lipids and carbohydrates.

As used herein, and unless otherwise specified, the term 'macromolecule'-as defined by IUPAC-refers to a molecule of high relative molecular mass, the structure of which essentially comprises the multiple repetition of units derived, actually or conceptually, from molecules of low relative molecular mass. Such a molecule may for example comprise in excess of 1000 atoms. Many of the biomolecules mentioned above are also macromolecules. Other examples include non-biological polymers.

As used herein, and unless otherwise specified, the term 'small molecule' refers to a molecule having a molecular weight less than or equal to 1000 Da. Examples of small molecules include small biomolecules and non-biological molecules (*e.g.*, chemical compounds).

As used herein, and unless otherwise specified, the term 'contaminant' refers to a species that is undesired. Typically, the contaminant may interfere with or confound the desired separation, detection, measurement, analysis, etc. of the analyte. Examples of contaminants include, but are not limited to, impurities, debris, side-products and other substances that are different from-even while they may be chemically and/or physically very similar to-the analyte. Like the analyte, the contaminant may thus in some instances be a biomolecule, macromolecule, small molecule or ionic species.

As used herein, and unless otherwise specified, the term 'target particle' refers to the particle that is desired to be captured at a capture site. The target particle can be either an analyte or a contaminant, depending on the specific application and separation goals.

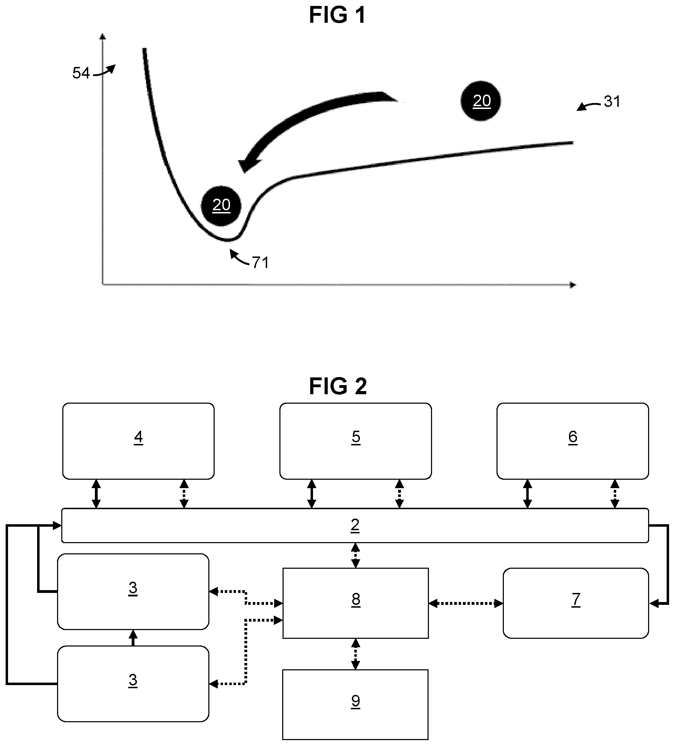

As used herein, and unless otherwise specified, the term 'capture site' refers to a location or region within the fluidic channel where the attractive and repulsive forces acting on the target particle create a local potential minimum, thereby trapping and retaining the target particle when it enters the capture site. Such a capture site is typically not delimited by walls or surfaces, but by the force fields giving rise the local potential minimum. This is also schematically depicted in FIG 1, showing the particle (20) being pulled-*i.e.*, experiencing an attractive force-from the liquid (31) into the capture site (71) where there is a local potential minimum. On the left side-for example, closer to an electric double layer (54)-a repulsive force is pushing the particle back towards to the capture site (71)- *i.e.*, towards the local potential minimum. Note that a local potential minimum entails not only that the attractive and repulsive forces balance out at the minimum (which is also the case for a local potential maximum), but moreover that a small displacement away from said minimum yields a combined force (the sum of the attractive and repulsive forces) pulling the particle back towards said minimum.

As used herein, and unless otherwise specified, the term 'attractive force' refers to a force that attracts or pulls the target particle towards a specific location (*e.g.*, a capture site). Examples of attractive forces include, but are not limited to, dielectrophoretic, electrophoretic, electro-osmotic, and other electromagnetic (*e.g.*, generated by the electrodes and) or fluidic forces that can act on the target particle. In embodiments, the attractive force may have a magnitude roughly in the order of tens to hundreds of piconewton (pN).

As used herein, and unless otherwise specified, the term 'repulsive force' refers to a force that repels or pushes the target particle away from a specific location (*e.g.*, the surface of a well). Examples of repulsive forces include, but are not limited to, electrostatic forces, steric forces, and forces arising from interactions between the target particle and an electric double layer (*e.g.*, on the surface of the well). In embodiments, the repulsive force may a magnitude roughly in the order of tens to hundreds of piconewton (pN).

As used herein, and unless otherwise specified, the term 'electric double layer' refers to the structure of charged ions and molecules that forms at the interface between a charged surface (*e.g.*, a surface of or near an electrode when a voltage is applied, or the surface of a charge particle) and an electrolyte solution. The electric double layer typically comprises a compact layer of adsorbed ions and a diffuse layer of mobile ions, which can exert a repulsive force on charged particles near the electric double layer.

As used herein, and unless otherwise specified, when a first entity (*e.g.*, an electrode) is said to be 'near' a second entity (*e.g.*, a capture site) it is meant that the first entity is at a distance from the second entity in the order of the size (*e.g*., an average dimension) of the target particle. For example, the first entity is at a distance from the second entity equal to 10 times the size of the target particle or less; preferably 7 times or less, more preferably 5 times or less, still more preferably 3 times or less, such as 2 times or less.

As used herein, and unless otherwise specified, a set of electrodes "being ... of the well's depth below/above the top opening" may refer to the location of the top, bottom or the centre of mass of the said set of electrodes below/above said level.

In a first aspect, the present invention relates to a module for separating an analyte from a contaminant, comprising: i) a fluidic channel for flowing therethrough a liquid comprising the analyte and the contaminant; ii) a plurality of capture sites in the fluidic channel; and iii) a plurality of electrodes arranged near the capture sites, such that by operating the electrodes both an attractive force and a repulsive force acting on a target particle can be realized, the attractive force and/or repulsive force being tuneable so that the forces acting on the target particle create a local potential minimum at one of the capture sites, thereby capturing the target particle at said capture site, the target particle being either the analyte or the contaminant. Such a module is herein also referred to as a 'separation module'.

In embodiments, the module may comprise (or may be) a single chip or a package of several chips. In embodiments, the module may be a cartridge (cf. infra).

The liquid may for example be or comprise a sample of a complex mixture, such as urine, blood or a bioreactor sample. The sample may have varying degrees of complexity; such as a growth medium, a lysed growth medium or a centrifuged sample.

In embodiments, the liquid may further comprise ionic species (*e.g*., at least one, but typically more). In embodiments, the liquid may have an ionic strength of from 1×10⁻⁶ to 10 M. For example, the liquid (*e.g.*, water) may comprise an agent for buffering a pH of the liquid and/or for adjusting an ionic strength of the liquid. In general, the target particle may-but does not need to be-ionic itself. It will be understood though that the ionic species further comprised in the liquid are generally distinct from the target particle as such (*i.e.*, different from the target species). In embodiments, the ionic species may comprise one or more selected from: an alkali metal cation (*e.g.*, Na⁺ or K⁺), an alkaline earth cation (*e.g.*, Mg²⁺ or Ca²⁺), a polyatomic cation (*e.g.*, NH₄⁺), a halogen ion (e.g., Cl- or Br) or a polyatomic anion (*e.g.*, OH-, SO₄²⁻, PO₄³⁻, etc.). In embodiments, the ionic species may derive from a salt; such as NaCl, KCI, CaCl₂. etc.

In embodiments, the target particle may have a size (*e.g.*, a Stokes or hydrodynamic radius) in the range of 0.5 nm to 5 µm, preferably 1 nm to 1 µm. In embodiments, the target particle may be a polarizable target particle. Polarizable target particles can advantageously experience a dielectrophoretic force in a non-uniform electric field.

The module may in embodiments be for separating a plurality of analytes from one or more contaminants, and/or a plurality of contaminants from one or more contaminants . This may for instance involve capture sites attuned to different target particles (cf. infra).

In embodiments, the module may further comprise: iv) a controller (*e.g*., a CMOS-based controller) for operating the electrodes. In embodiments, the controller may further be for controlling a flow through the fluidic channel. Enacting control on the flow may for instance be achieved by means of a pump or valve, optionally in combination with a flow meter for measuring the flow rate. In embodiments, the controller may fully control the electrodes and/or flow; or the controller may receive external input (*e.g*., external instructions, such as frequency and strength of the electrical field, flow rate, etc.) and the controller may implement said external input. Such an on-chip/in-package controller advantageously allows close and direct control/regulation over various components (*e.g.*, electrodes and flow) in the module, while facilitating parallelization and small footprint on the system level.

In embodiments, the fluidic channel may comprise or be fluidically coupled to: a first inlet for receiving the liquid comprising the analyte and the contaminant. In embodiments, the fluidic channel may comprise a second inlet for receiving a buffer (*e.g*., a washing or reaction buffer). In embodiments, the fluidic channel may comprise one or more outlets for extracting the separated analyte and/or contaminant. In embodiments the fluidic channel can comprise still further inlets (*e.g.*, for further liquids comprising the analyte and contaminant, or further buffers) and/or outlets. The fluidic channel can advantageously have various inlets and outlets, allowing controlled and independent introduction of the liquid and buffer, and recovery of the separated analyte and/or contaminant.

In embodiments, the module may comprise one or more arrays of the capture sites For example, each array may comprise at least 5 capture sites, preferably at least 20, more preferably at least 50, still more preferably at least 100, yet still more preferably at least 200, most preferably at least 500; such as 1000, 2000, 5000, 10000, etc. In embodiments, the module may comprise at least 5 arrays, preferably at least 10, more preferably at least 20, still more preferably at least 50, yet still more preferably at least 100, most preferably at least 200; such as 500, 1000, etc. etc Indeed, the capture sites of the present invention advantageously lend themselves particularly well to being (highly) parallelized/multiplexed. Moreover, providing the captures sites in a (relatively dense) array and then arranging a plurality of said arrays in the fluidic channel advantageously allows to provide a very large number capture sites and thus thereby a high exposure of the target particle to the capture sites, thereby increasing the effectiveness of the module.

In embodiments, the fluidic channel may snake so as to cover at least 50% of a zone having a length and a width of each at least 5 times the fluidic channel's width; preferably at least 70%, more preferably at least 90%. This advantageously ensures that the fluidic channel substantially covers the zone, thereby maximizing the capture area for a given footprint.

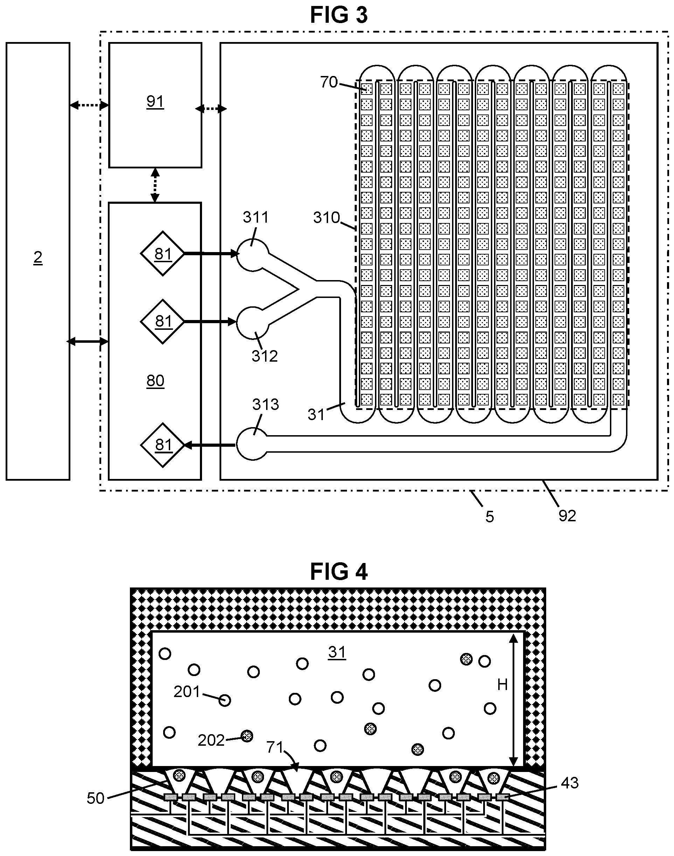

In embodiments, the captures sites may be near a bottom or top of the fluidic channel. In embodiments, the fluidic channel may have a height (H in FIG 4) equal to 1000 times the size of the target particle or less; preferably 500 times or less, more preferably 200 times or less, still more preferably 100 times or less, most preferably 50 times or less, such as 20 or 10 times or less. Such a channel height advantageously ensures that the target particle is at a distance from the captures sites where the attractive force can adequately act on the target particle.

In embodiments, the module may comprise a plurality of wells. Each well may typically have a top opening up to the fluidic channel, a bottom, and a depth extending from the top to the bottom. In preferred embodiments, a capture site may be situated near the top of the (*e.g*., each) well. The presence of wells in the fluidic channel advantageously helps in defining the capture sites; for example by increasing the effect of certain forces (*e.g.*, the EDL force, cf. infra) and/or by facilitating the formation of a non-uniform electric field (*e.g.*, due to break in symmetry between the well and bulk electrolyte). In embodiments, the module may comprise a plurality of capture devices, each comprising: at least one of said wells; a first set of electrodes at least 50% of the well's depth below the top opening, preferably at least 65%, more preferably at least 75%, for generating an electric field. In embodiments, the module may further comprise a second set of electrodes at most 50% of the well's depth below the top opening, preferably at most 35%, more preferably at most 25%. Such configurations advantageously provide capture devices in which the attractive and/or repulsive forces can be very effectively controlled through operating the electrodes.

The well is typically not limited by its shape. Notwithstanding, the well may for example be shaped as a cube, a rectangular cuboid, a (truncated) pyramid, a cylinder, a (truncated) cone, etc. Accordingly, the top opening may be square, rectangular, round, oval, etc.

The top opening typically has two perpendicular dimensions, the shortest of which may be referred to as its 'width' and the longest as its `length' (or both as the 'diameter' in case of a round top opening). In embodiments, the top opening may have a width of from 5 nm to 10 µm, preferably from 10 nm to 5 µm, more preferably from 20 nm to 2 µm, still more preferably from 50 nm to 1 µm, most preferably from 100 nm to 500 nm. In embodiments, the top opening may have an aspect ratio (*i.e*., width:length) of from 1:1 to 1:5000, preferably from 1:1 to 1:1000, still more preferably from 1:1 to 1:500, such as 1:1 to 1:200, 1:1 to 1:100, 1:1 to 1:50 or 1:1 to 1:20. The top opening may often be perpendicular to the well's depth (*i.e*., the top opening's width and length may be perpendicular to the well's depth); but in general this is not necessary and the top opening may make a minimal angle with the well's depth of at least 30°, preferably at least 45°, more preferably at least 60°, still more preferably at least 75°, most preferably at least 80°, such as 85° or 90° (*i.e*., perpendicular).

In embodiments, the well's depth may be from 5 nm to 10 µm, preferably from 10 nm to 5 µm, more preferably from 20 nm to 2 µm, still more preferably from 50 nm to 1 µm, most preferably from 100 nm to 500 nm. In embodiments, the aspect ratio of the well's depth to the top opening's width may be from 10:1 to 1:10, preferably from 5:1 to 1:5, more preferably from 2.5:1 to 1:2.5, still more preferably from 1.5:1 to 1:1.5, most preferably 1:1. In embodiments, the well may have a footprint (*e.g*., the area of the orthogonal projection of the well onto the substrate wherein the well is defined) of from 4 nm² to 1000 µm², preferably from 25 nm² to 250 µm², more preferably from 100 nm² to 40 µm², most preferably from 0.01 µm² to 10 µm².

The well may typically be defined between a bottom, one or more sidewalls and a top. In some embodiments, one or more of the electrodes-or a covering layer thereover (cf. infra)-may further define the well. The top is typically open and coplanar with the sidewalls. In embodiments, the well may be at least partially delineated by a surface comprising a dielectric material (*e.g*., SiO₂, SiNₓ or HfO₂). In embodiments, at least the sidewalls may typically comprise the dielectric material. For example, the well may be formed in a dielectric layer. The dielectric material may advantageously provide insulation between the electrodes. Moreover, it may typically advantageously offer a good surface (*e.g*., a good isoelectric point) for forming a suitable electric double layer thereon as such, or which lends itself well for surface engineering to that effect. In embodiments, a surface of the well may be modified so as to control an electric double layer formed thereon. For example, the surface may be modified by a surface treatment (*e.g*., a plasma treatment) and/or a coating.

In some embodiments, the bottom may be at least partially open. In embodiments, the bottom may open down to a further fluidic channel (*e.g*., galvanically separated from the first fluidic channel). Thus, the well may be (akin to) a nanopore between the first/top and second/bottom fluidic channel. In such embodiments, the system may further comprise an electrode in the top fluidic channel and an electrode in the bottom fluidic channel. Applying an electric potential between these electrodes can then advantageously allow to give rise to further effects/forces which can act upon the target particles, such as electrophoretic (*e.g*., related to *F* = *qE*) and/or electro-osmotic (*e.g*., related to *F* = *6πεr*) forces. Moreover, it can advantageously offer other target particle detection approaches (cf. infra), *e.g*., via resistive pulse sensing.

In embodiments, the first set of electrodes may be at least 80% or 90% of the well's depth below the top opening. Note that the first set of electrodes may extend-and even be-below the well's bottom. Accordingly, the first set of electrodes may in embodiments be at most 150% of the well's depth below the top opening, preferably at most 135%, more preferably at most 125%, still more preferably at most 120%, such as at most 110%.

In embodiments, the electric field may be a non-uniform (*e.g*., spatially inhomogeneous) electric field. A non-uniform electric field gives rise to dielectrophoresis, which can advantageously be used to exert a force onto (*e.g*., attract) a polarizable target particle (cf. infra). The generated (non-uniform) electric field may preferably extend in and beyond the well, such that it can exert a non-negligible (dielectrophoretic) force onto a target particle outside the well.

In embodiments, the capture device may further comprise a second set of electrodes at most 50% of the well's depth below the top opening, preferably at most 35%, more preferably at most 25%. Akin to the first set of electrodes, the second set of electrodes may extend-and even be-above the top opening. Accordingly, the second set of electrodes may in embodiments be at most 50% of the well's depth above the top opening, preferably at most 35%, more preferably at most 25%, still more preferably at most 20%, such as at most 10%. The second set of electrodes may be for generating a further electric field. Together with the first set of electrodes, this can typically be used to form a more complex (*e.g*., multipole) combined electric field. Not only does such a combined electric field typically have a larger reach (*i.e*., extending the deeper into the liquid, but it can also induce other effects (*e.g*., electrorotation). Accordingly, use of a second set of electrodes advantageously allows on the one hand to affect target particles further out from the well; and on the other hand to produce further effects which can be used (cf. infra) for differential capturing and/or for diversified signal detection.

In embodiments, the first and/or second set of electrodes will typically comprise at least two electrodes; such as consisting of two, three, four or even more electrodes. In embodiments, the electrodes may independently be made of a conductive material (*e.g*., Pt, Ru orTiN). In embodiments, one or more of the electrodes may be provided on an adhesion layer (*e.g.*, Ti, TiN, Cr or TaN). Such an adhesion layer can advantageously prevent delamination of the electrode. Additionally or alternatively, a covering layer (*e.g*., SiO₂, SiNₓ or HfO₂) may be provided over one or more of the electrodes. Since typically only capacitive currents are used/needed in the operation of the capture device (cf. infra), at least some of the electrodes can advantageously be insulated by a covering layer to prevent Faradaic currents (*e.g*., arising due to electrochemical reactions). Moreover, this can also protect the electrode material from direct contact with the liquid, which might damage certain electrode materials (*e.g*., corrosion of Al in an electrolyte); particularly when a high potential is involved (*e.g*., electrochemical corrosion of Ru due to oxidation above a certain voltage). Notwithstanding, such a covering layer may typically be relatively thin (*e.g*., in the order few nm to a few tens of nm, such as 2-20 nm).

It will be readily appreciated that several factors will influence the generated electric field and the force exerted onto the target particle; including *e.g*., the size, geometry, configuration and operation (*e.g.*, frequency) of the electrodes, as well as the nature (*e.g*., polarizability) of the target particle. Notwithstanding, it is well within the knowledge and capabilities of the skilled person-ultimately by trial-and-error-to configure and operate suitable electrodes in order to achieve a suitable effect onto a target particle in the fluidic channel.

In embodiments, a plurality of the capture devices may have the same characteristics, and/or a plurality of the capture devices may have different characteristics. For example, the system may comprise one or more arrays wherein the capture devices have the same characteristics within an array and different characteristics between arrays. Herein, 'characteristics' may for example comprise the size of the well (*e.g*., of the top opening) and the nature of the well (*e.g*., its surfaces). The nature of the well's surfaces-and in particular the isoelectric point, which has a substantial effect on the electric double layer which is formed on said surface-can typically be controlled by surface engineering. As such, wells of different nature may comprise the surfaces of said wells being composed of different materials (*e.g*., different dielectrics), and/or having been subjected to a different surface treatment and/or coating (cf. supra).

In preferred embodiments, the system may comprise at least captures devices having differently sized wells. Since the characteristics of the capture device play a significant role in determining which target particles can be captured by it, a system comprising captures devices with different characteristics is advantageously particularly suited for capturing different types of target particles.

In embodiments, the system may further comprise driving and/or read-out circuitry (*e.g.*, CMOS-based) for operating the electrodes.

In some preferred embodiments, the system may be a sensor probe. For example, the sensor probe may be for inserting directly into the liquid. Such a sensor probe is advantageously a convenient form for using the present system, for example for performing an action (*e.g*., a measurement) in (bio-)reactor.

In embodiments, the fluidic channel may be defined by an impermeable barrier having a (semi-)permeable portion. In embodiments, the (semi-)permeable portion may be formed by a filter (*e.g*., a (nano)porous membrane) or a microfluidic sampling system. In embodiments, the (semi- )permeable portion may comprise pores with an average width of 1000 µm or less; preferably 500 µm or less, more preferably 200 µm or less, yet more preferably 100 µm or less, still yet more preferably 50 µm or less, most preferably 20 µm or less. A (semi-)permeable portion (in an otherwise impermeable barrier) advantageously allows to (selectively; *e.g*., based on size-exclusion and/or chemical affinity) prevent certain particles and/or chemical species from entering the fluidic channel, where they could interfere with the operation of the capture device. Alternatively or additionally, it can advantageously be used to dilute the liquid with a sampling buffer to achieve more favourable measurement conditions (*e.g.*, in terms of pH or conductivity).

In embodiments, any feature of any embodiment of the first aspect may independently be as correspondingly described for any embodiment of any of the other aspects.

In a second aspect, the present invention relates to a system comprising a plurality of fluidically and/or electronically coupled modules, at least one of said modules being a module according to any embodiment of the first aspect. Such a system is herein also referred to as a 'modular system'.

In embodiments, one or more further modules may be selected from a supply module, a synthesis module, an analysis module, a collection module, a control module and a user interface module. Systems in accordance with the present invention can advantageously combine several and various modules, thereby allowing to make an integrated all-in-one system adapted for a specific target application or usable for a variety of target applications. In embodiments, the control module may be for controlling the operation and interaction of one or more of the other modules. In embodiments, the control module may be adapted for performing-or participate in performing (*e.g.*, steering/directing)-the method according to any embodiments of the second aspect.

In embodiments, the modules may be (fluidically and/or electronically) coupled in series or in parallel or a combination thereof. Coupling modules (equivalent or distinct) in series advantageously allows to string processing steps and thereby realize more involved/complex processing (*e.g*., multi-step synthesis; higher purity; combinations of synthesis, separation and analysis; etc.). Coupling of modules in parallel advantageously allows higher throughput (*e.g*., my performing the same step in parallel across multiple modules) or multiplexing (*e.g*., targeting different molecules across multiple distinct modules).

In embodiments, the system may further comprise an electrofluidic (*i.e*. fluidic and electronic) backplane. An electrofluidic backplane advantageously allows the modules to be easily and straightforwardly intercoupled-both fluidically and electronically-through said backplane. In embodiments, the modules may have a standardized interface (*e.g.*, a standardized fluidic flow interface and/or a standardized electronic interface). Standardized interfaces advantageously allow the modules to be straightforwardly connected to the system and to be easily exchanged, interchanged and/or reconfigured.

In preferred embodiments, one or more of the modules may be a cartridge. In embodiments, the system may be adapted for receiving one or more of such cartridges. Modules in the form of cartridges advantageously allow easy removal and replacement. Moreover, it advantageously allows to combine disposable modules (*e.g.*, which need to be replaced between different uses, *e.g.*, because of having become contaminated by the previous use; as for example in the case of a synthesis module or a separation module) and non-disposable modules (*e.g.*, which do not readily become contaminated and therefore can be reused repeatedly; as for example in the case of control module or user interface module), while minimizing needless waste. In other embodiments, the module may be integrated into the system as a fixed component (*i.e.*, in a relatively permanent fashion).

In embodiments, any feature of any embodiment of the second aspect may independently be as correspondingly described for any embodiment of any of the other aspects.

In a third aspect, the present invention relates to a method for separating an analyte from a contaminant, the method comprising: a) flowing a liquid comprising the analyte and the contaminant through the fluidic channel of a module as defined in any embodiments of the first aspect; and b) operating the plurality of electrodes so as to realize both the attractive force and the repulsive force acting on the target particle, and tune the attractive force and/or repulsive force so that the forces acting on the target particle create a local potential minimum at one of the capture sites, thereby capturing the target particle at said capture site, wherein the target particle is either the analyte or the contaminant.

In embodiments, the method may further comprise: c) releasing and collecting the target particle. This advantageously allows recovery of the separated analyte or contaminant.

In embodiments, the target particle may be the analyte and the concentration of the analyte may be lower than that of the contaminant, or the target particle may be the contaminant and the concentration of the contaminant may be lower than that of the analyte. The method may advantageously enable two main modes of operation: selective capture of (low concentration) contaminants or up-concentration of (low concentration) analytes.

In embodiments, step b may comprise generating a non-uniform electric field such that the attractive force is an attractive dielectrophoretic force acting on the target particle. In embodiments, the attractive dielectrophoretic force-also referred to as 'positive' dielectrophoresis-may be directed towards the electrodes (*e.g*., the first and/or second set of electrodes); preferably (at least) towards the first set of electrodes. In preferred embodiments, the non-uniform electric field may have its highest field strength at or near the first set of electrodes (*e.g.*, at the edges of the first set of electrodes). Positive dielectrophoresis is directed towards the highest field strength; so by having the highest field strength around the first set of electrodes-which are situated towards the bottom of the well-the target particle will advantageously experience an attractive force pulling it into the well.

In embodiments, step b may comprise applying to (at least some of) the electrodes an alternating voltage (AC voltage), optionally combined with a direct voltage (DC voltage or bias) (*i.e.*, an alternating voltage offset by a constant bias). In embodiments wherein the capture device comprises the first and second set of electrodes, step b may further comprise applying to the first set of electrodes an alternating voltage, optionally combined with a direct voltage. The alternating voltage(s) may for example (independently) have a sinusoidal, trapezoidal or rectangular waveform. In embodiments, step b may comprise modulating the operation-*e.g.*, the applied voltage, namely the AC and/or DC magnitude and AC frequency-of the at least first set of electrodes to tune the attractive dielectrophoretic force to the target particle. In embodiments, the alternating voltage may have an AC frequency range of from 1 kHz to 1 GHz, preferably 10 kHz to 100 MHz. In embodiments, the alternating voltage and/or the direct voltage may have a magnitude of from -5 to 5 V, preferably from -1 to 1 V, more preferably from -500 to 500 mV, such as at least -25 mV to 25 mV. In embodiments wherein the capture device comprises the first and second set of electrodes, step b may preferably comprise modulating the operation of the first and second set of electrodes to tune the attractive dielectrophoretic force to the target particle. Along with *e.g*., the relative polarizability of the target particle and the medium, the dielectrophoretic force experienced by a particle typically at partially depends on the non-uniform electric field. This includes not only the magnitude of said force but also its direction (*e.g.*, positive/towards or negative/away from the highest field strength), and this through respectively the (local) field strength and the field frequency. As such, by controlling the voltage (*e.g.*, the AC and/or DC magnitude and AC frequency) applied to the first and/or second set of electrodes, one can not only change the strength of the attractive force experienced by an target particle but also selectively-*e.g*., with respect to a further target particle or a contaminant-tune it towards said target particle.

In embodiments, the well may be at least partially lined with an electric double layer (EDL). The characteristics of the EDL (*e.g*., its size) typically depend on the pH of the liquid and the nature of the underlying surface on which it is formed, particularly in terms of its isoelectric point. The isoelectric point is the pH at which the surface carries no net electrical charge, so at any other pH the surface will carry a net charge and develop an EDL (and increasingly so the further one moves away from the isoelectric point). As such, the well will most typically always be at least partially line with an EDL.

Moreover, the EDL which is formed can advantageously be influenced by adjusting the pH of the liquid. Additionally, the DC bias of the electrodes also affects the EDL, so that the EDL near the electrodes (*e.g*., the EDL on the electrode surface or on a thin covering layer; cf. supra) can also be influenced by tuning the DC bias.

In embodiments, the repulsive force may be between the target particle and an electric double layer formed near the electrodes. Like the surface of the well, the target particle may typically have its own EDL. As the target particle is then attracted towards and into the well, its own EDL will interact with that of the well, creating ionic concentration differences which generate an osmotic pressure and thereby a repulsive force (which may be referred to as 'EDL force') between the target particle and the well. While the EDL force is typically dominant, note that even in the absence of an EDL on the target particle, the latter will anyway experience a repulsive force as it gets closerto the well's surface (*e.g.*, at least through a steric effect with the well's EDL or ultimately with the well's surface as such).

Thus, the modules, systems and methods in accordance with the present invention advantageously allow to capture a target particle of interest by the interplay of (tuneable) attractive and repulsive forces. Most typically, these forces preferably include at least an attractive dielectrophoretic force and a repulsive EDL force. However, they may more generally include an interplay of any two or more of: dielectrophoretic (positive and/or negative), EDL, electrophoretic, electro-osmotic, steric, Coulomb, etc. forces.

In embodiments, capturing the target particle from the liquid may comprise selectively capturing the target particle with respect a further target particle (*e.g.*, target particles of another target particle species) or a contaminant. For a captured target particle (at rest), the attractive and repulsive forces are (overall) in balance. However, whether this balance point can be reached-and if so, where it is located-depends on the particle (*e.g.*, its polarizability, charge, EDL, etc.), and the interplay of these forces. Moreover, these forces can generally be (individually) controlled and tuned. As such, not only does it become possible to capture a target particle selectively (with respect a further target particle or a contaminant); the tuning of the forces also allows to specifically target a particular species of target particle.

In embodiments, step b may comprise tuning the attractive force and/or repulsive force near two or more capture sites to capture a dissimilar target particle at each capture site. As noted previously, the present invention especially excels when the system comprises a (large) plurality of capture devices. Indeed, a range of factors-both through manufacturing (*e.g.*, well size and/or surface functionalization/modification) and during operation (*e.g.*, the applied AC and/or DC voltage magnitude and AC voltage frequency, to the first and/or second electrodes individually)-can be tuned differently for different capture devices, so that these can advantageously be targeted toward different target particles of interest. Thus, within a single system, an arbitrarily large number of capture devices can in principle be configured for selectively capturing various target particles. Moreover, since at least some of these factors can be tuned in operation, the modules, systems and methods in accordance with the present invention need not be fabricated for a specific application, but can be more universal and then finetuned to the application during used (*e.g.*, also allowing them to be reconfigured for other applications).

In embodiments, the method may further comprise: detecting whether the target particle is captured by the well; analysing the captured target particle; and/or separating the captured target particle from the liquid. In some embodiments, detecting and/or analysing the target particle may for example comprise determining a capacitance measured between the first and/or-if present-second set of electrodes (and thus detecting whether the target particle is captured by the well through the measured capacitance). In alternative or complementary embodiments, it may also comprise resistive pulse sensing (cf. supra). In embodiments, separating the captured particle from the liquid may comprise capturing the particle and subsequently flushing the liquid in the fluidic channel (*e.g.*, before releasing the captured target particle back into the fluidic channel).

The solutions in accordance with the present invention may be particularly advantageously used in various application areas where a reliable, non-destructive method to characterize and purify certain analytes of interest is currently lacking. For example, it may be used to measure the size and/or distribution (or dispersity)-but also other characteristics (cf. supra)-of: liposomes in liposome drug product manufacturing; viruses in virus variant detection and/or viral vector product manufacturing; vesicle and/or sub-cellular organelles in sample preparation based on cellular components; biopolymer (*e.g*., polynucleotide or polypeptide) fragments in (cell-free) biopolymer level screening, or pre-screening prior to biopolymer sequencing; contaminant particles in chemicals used for semiconductor manufacturing; etc. Being reliable and non-destructive, the present solutions may be especially favourable in quality control in the above and other application areas.

In embodiments, any feature of any embodiment of the third aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Modular system

An illustrative modular system (1) in accordance with the present invention is schematically depicted in FIG 2; comprising a plurality of modules coupled to one another by fluidic connections (solid lines)-*e.g*., via an electrofluidic backplane (2)-and/or electronic connections (dotted lines; *e.g.*, data and/or control connections). Such a modular system (1) may for example a supply module (3)- FIG 2 depicting two such modules, of which one (bottom) connects to external fluidics (*e.g.*, a pump) and one (top) represents an internal supply of reagents-, a synthesis module (4) for synthesizing one or more analytes, a separation module (5) for separating (or purifying) the one or more analytes from one or more contaminants (*e.g*., undesired side products), an analysis module (6) for analysing (some of) the analytes and/or contaminants, a collection module (7) for collecting (some of) the analytes and/or contaminants, a control module (8) for controlling the operation and interaction of the various modules, and a user interface module (9) for allowing input (*e.g*., selection of settings, program, etc.) from and/or output (*e.g.*, analysis data) to a user.

It will be clear though that this is but one of many possible configurations for such a modular system, to which modules can be added or removed as desired for the application at hand. For example, formation of a desired end product may involve a multi-step synthesis, in which case the modular system (1) may comprise a plurality of synthesis modules (4) and separation modules (5)- and optionally analysis modules (6). In another example, rather than reagents, the supply module (3) may be for supplying a (complex) sample (*e.g.*, a blood sample) and the modular system (1) may comprise one or more separation modules (5) and analysis modules (6), but no synthesis module (4). Ideally, each module may comprise a standardized fluidic flow interface for coupling to the electrofluidic backplane (or similar connecting structure), thereby allowing seamless exchange of modules.

In general, in a modular system (1) in accordance with the present invention, all of the aforementioned modules-safe for the separation module (5)-are typically optional.

### Example 2: Separation module

Referring now to FIG 3, which schematically illustrates a possible separation module (5) in accordance with the present invention; for example for integration into a modular system as described above. More in particular, the separation module (5) may be integrated into a system (*e.g.*, a modular system as above) as a fixed component (*i.e*., in a relatively permanent fashion) or as a cartridge that can be easily removed and replaced (with the system being adapted for receiving such a cartridge).

The separation module (5) as shown in FIG 3 includes a first inlet (311) for receiving the liquid comprising the analyte and the contaminant, and a second inlet for a buffer (*e.g.*, a wash buffer). The first inlet (311) and second inlet (312) are connected to a serpentine fluidic channel (31). This fluidic channel (31) is designed to snake/meander/bend upon itself to cover a substantial area of a zone (310), thereby having a large area available for capture sites in this zone (310) and thus allowing maximal contact between the liquid and the capture sites (in turn ensuring an effective capture of the target molecule within a compact space). The plurality of capture sites in the fluidic channel (31) are provided in the form of arrays (70), each comprising a plurality of the capture sites. The fluidic channel (31) continues to the outlet (313), where the separated analyte(s) and/or contaminant(s) can be extracted. The separation module (5) further comprises a fluidic flow interface (80), with fluidic valves (81) coupled to each of the first inlet (311), second inlet (312), and outlet (313). The fluidic flow interface (80) further couples with the electrofluidic backplane (2). Moreover, the separation module (5) may comprise a controller (91), providing on-chip/in-package electronic control-optionally steered from the outside (*e.g.*, by a control module; cf. supra)-for the electrodes and valves. The controller (91) also couples to the electrofluidic backplane (2) to allow coordinated operation and/or data exchange with other modules (*e.g*., via the control module).

A separation module (5) in accordance with the present invention may for instance be configured as a single chip or a package of several chips. As illustrated in FIG 3, the module (5) is a package comprising the fluidic flow interface (80), the controller (91), and the separation chip (92).

FIG 4 schematically shows a cross-sectional view (perpendicular to the flow direction) of a fluidic channel in accordance with the present invention. The fluidic channel (31) defines the path through which the liquid-containing both one or more analytes (201) and contaminants (202)-flows. As depicted, the fluidic channel (31) has a plurality of wells (50) and electrodes (43) positioned near (*e.g*., underneath and/or adjacent to) the wells (50), thereby defining a plurality of capture sites (71).

### Example 3: Use of the separation module

There are generally two main operation modes in which the separation module may be used.

### Example 1A: Using the separation module to selectively remove one or more contaminants

In the first main operation mode, the target particles may be one or more contaminants (202), and the liquid may be purified by capturing and removing a contaminant (202) selectively with respect to the analyte (201). This mode is typically most suited when the concentration of the contaminant (202) is lower than that of the analyte (201).

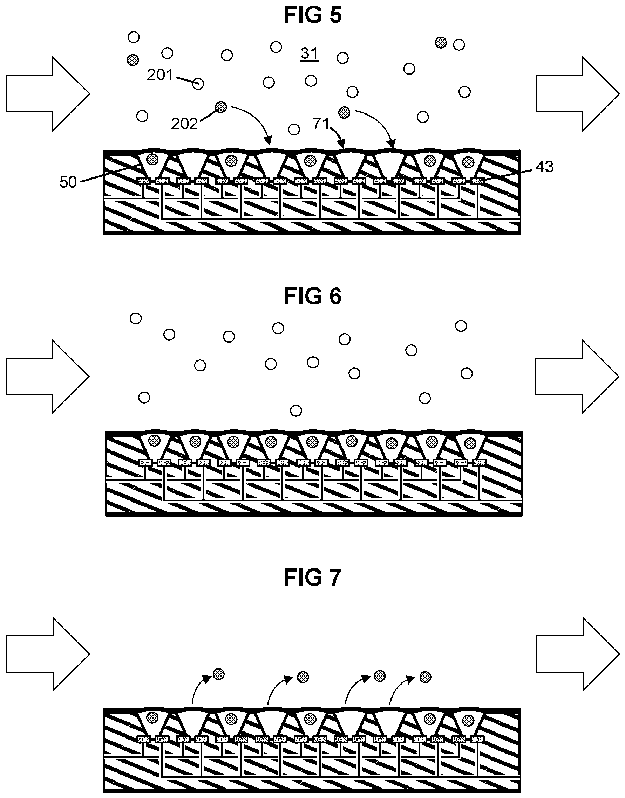

As shown in FIG 5, the liquid may to this end first be flown through the fluidic channel (31) and 'over' the capture sites (71). By tuning the operation of the electrodes (43)-*e.g.*, to generate a particular non-uniform electric field-one or more of the forces (*e.g*., an attractive dielectrophoretic force) acting on the particles can be modulated such that there is a local potential minimum at the capture sites only for the contaminant (202), and not for the analyte (201); in other words, the capture sites (71) are attuned selectively towards the contaminant (202). As the contaminant (202) is captured, the purified liquid continues to flow towards an outlet (and *e.g.*, a subsequent collection or further processing module). Multiple different contaminants (202) may be captured within a single module by varying the operation of different electrodes (43) and/or having wells (50) with distinct characteristics (*e.g*., different sizes), thereby attuning different capture sites (71) to different contaminants (202).

Optionally, the occupancy of the captures sites (71) may be monitored using *e.g*., impedance measurements. When-as depicted in FIG 6-a certain level of occupancy is reached (*e.g.*, substantially all capture sites (71) are saturated) or when the desired purification has been performed (*e.g*., all contaminant (202) has been captured or all of the liquid to be purified has been flown over the capture sites (71)), the introduction of additional liquid can be interrupted and the fluidic channel (31) can be washed (*e.g*., by flowing a washing buffer therethrough), thereby evacuating the remaining analyte (201).

Next, as shown in FIG 7, the electrodes can be operated to release the contaminant (202)- *e.g*., by changing one or more of the forces to upset the force balance-, and the fluidic channel (31) can again be washed to evacuate the contaminant (202), which may *e.g.*, be collected as waste. When the capture sites (71) have been sufficiently regenerated, the process can start anew.

### Example 3B:Using the separation module to selectively concentrate one or more analytes

The second main operation mode is similar to the first, but herein the target particles are one or more analytes (201). This mode is typically most suited when the concentration of the analyte (201) is lower than that of the contaminant (202).

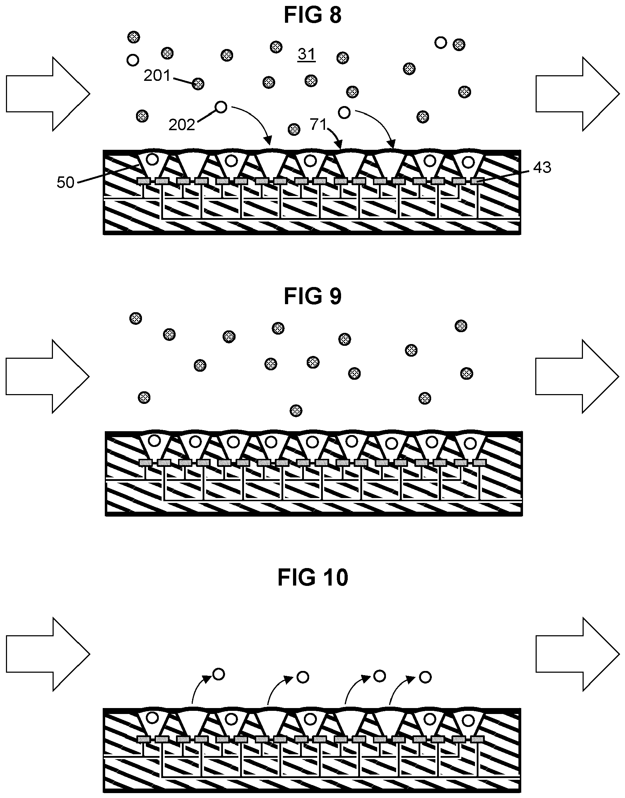

Accordingly, rather than purifying the liquid as it flows through the fluidic channel (31), the analyte (201) becomes concentrated in the capture sites (71); cf. FIG 8. As the analyte (201) is captured, the depleted liquid continues to flow towards the outlet and can be collected as waste. Multiple different analytes (201) may again be captured within a single module by varying the operation of different electrodes (43) and/or having wells (50) with distinct characteristics (*e.g.*, different sizes), thereby attuning different capture sites (71) to different analytes (201).

Upon reaching a certain level of occupancy (*e.g.*, substantially all capture sites (71) are saturated) or when the desired concentration has been performed (*e.g*., all analyte (201) has been captured or all of the liquid has been flown over the capture sites (71))-as shown in FIG 9-, the introduction of additional liquid can be interrupted and the fluidic channel (31) can be washed (*e.g.*, by flowing a washing buffer therethrough), thereby evacuating the remaining contaminant (202).

Next, as shown in FIG 10, the electrodes can be operated to release the analyte (201)-*e.g.*, by changing one or more of the forces to upset the force balance-, and the fluidic channel (31) can again be washed to evacuate the concentrated analyte (201), which may subsequent be flown to *e.g.*, a collection or a further processing module. When the capture sites (71) have been sufficiently regenerated, the process can start anew.

### Example 4: Capture device

### Example 4A: Capture device having a closed bottom

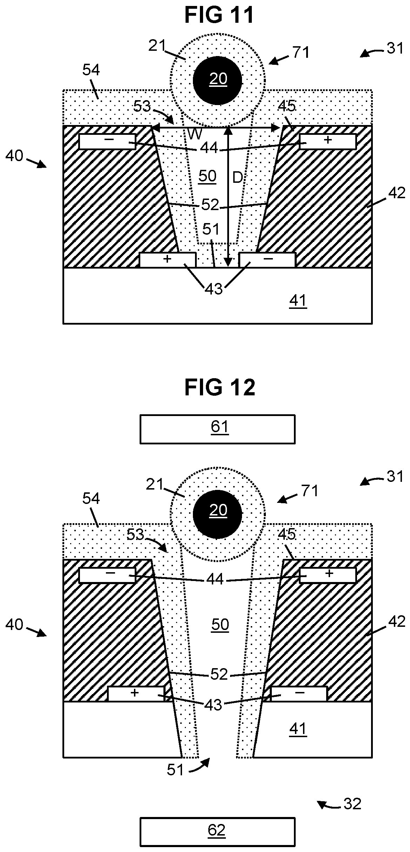

Realizing the plurality of captures sites in a separation module as aforementioned may for instance be achieved using a plurality of wells in the fluidic channel, and capture devices formed about these wells. FIG 11 illustrates such a capture device (40), comprising a well (50) in a fluidic channel (31) with a liquid comprising the target particle (20). The capture device (40) comprises a substrate (41) (*e.g.*, a Si wafer) and a dielectric layer (42) (*e.g.*, SiO₂) thereon, with the well (50) being formed in the dielectric layer (42). A first set of electrodes (43) is situated in a bottom half of the well (50), namely at the bottom of the well (50) (on the substrate (41)). A second set of electrodes (44) is situated in a top half of the well (50), namely in/covered by a dielectric (*e.g.*, SiO₂) cover layer (45). The well (50) is defined between a bottom (51) (which as depicted corresponds to the substrate (41)), the bottom electrodes (43), sidewalls (52) in the dielectric layer (42)/cover layer (45), and a top (53) opening up to the fluidic channel (31). Both the well (50) and the target particle (20) have an electric double layer (54, 21).

In operation, the first (43) and second (44) set of electrodes can be driven so as to generate an attractive dielectrophoretic force on the particle (20). Meanwhile, as the target particle (20) is pulled into the well (50), its EDL (21) and the well's EDL (54) will interact and give rise to a repulsive force. By tuning the dielectrophoretic force, a point can be reached where the attractive force(s) balance out the repulsive force(s), and thus the target particle (20) is effectively captured at a capture site (71). The capture device (40) can be further equipped to detect and/or analyse the captured target particle (20), for example through performing a capacitance measurement on the well (50).

Although FIG 11 only depicts one capture device (40), it will be clear that the module can comprise many such capture devices in parallel; some of which may have the same characteristics, while others may have different characteristics. By providing wells with different characteristics-such as different sizes, different natures of the surface (for example different isoelectric points; *e.g.*, through a difference in post-processing) giving rise to different EDL's, etc.-and/or applying different driving profiles to their electrodes, different wells can be configured for capturing different target particles, so that the same module can be used to capture and detect/analyse various target particles in parallel.

### Example 4B: Capture device having an open bottom

We now refer to FIG 12, illustrating a capture device (40) which is generally similar to that of FIG 11 but wherein the bottom (51) of the well (50) is open. As such, the well (50) forms a through-hole (like a nanopore) connecting the upper fluidic channel (31) to a lower fluidic channel (32).

FIG 12 further depicts an electrode (61) in the top fluidic channel (31) and one (62) in the bottom fluidic channel (31). By applying an electric potential between these electrodes (61, 62), further effects/forces-such as electrophoretic and/or electro-osmotic forces-can be generated to act upon the target particle (20). Additionally, this can also enable other ways of detecting and/or analysing the target particle, such as via resistive pulse sensing.

It will be clear that a separation module in accordance with the present invention need not exclusively comprise capture devices (40) as depicted either in FIG 11 and FIG 12, but that these- as well as still other configurations-could be readily combined and integrated into a single module as desired.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A module (5) for separating an analyte (201) from a contaminant (202), comprising:
i) a fluidic channel (31) for flowing therethrough a liquid comprising the analyte (201) and the contaminant (202);
ii) a plurality of capture sites (71) in the fluidic channel (31); and
iii) a plurality of electrodes (43, 44) arranged near the capture sites (71), such that by operating the electrodes (43, 44) both an attractive force and a repulsive force acting on a target particle (20) can be realized,
the attractive force and/or repulsive force being tuneable so that the forces acting on the target particle (20) create a local potential minimum at one of the capture sites (71), thereby capturing the target particle (20) at said capture site,
the target particle (20) being either the analyte (201) or the contaminant (202).

2. The module (5) according to claim 1, further comprising:
iv) a controller (91) for operating the electrodes (43, 44).

3. The module (5) according to claim 2, wherein the controller (91) is further for controlling a flow through the fluidic channel (31).

4. The module (5) according to any of the previous claims, comprising a plurality of wells (50), each well (50) having a top (53) opening up to the fluidic channel (31), a bottom (51), and a depth (D) extending from the top (53) to the bottom (51), whereby one of the capture sites (71) is situated near the top (53).

5. The module (5) according to claim 4, comprising a plurality of capture devices (40), each comprising (71):
- at least one of said wells (50);
- a first set of electrodes (43) at least 50% of the well's depth below the top opening, preferably at least 65%, more preferably at least 75%, for generating an electric field; and
- optionally, a second set of electrodes (44) at most 50% of the well's depth below the top opening, preferably at most 35%, more preferably at most 25%.

6. The module (5) according to any of the previous claims, wherein the fluidic channel (31) snakes so as to cover at least 50% of a zone (310) having a length and a width of each at least 5 times the fluidic channel's width; preferably at least 70%, more preferably at least 90%.

7. The module (5) according to any of the previous claims, wherein the fluidic channel (31) comprises or is fluidically coupled to:
- a first inlet (311) for receiving the liquid comprising the analyte (201) and the contaminant (202), and
- a second inlet (312) for receiving a buffer.

8. A system comprising a plurality of fluidically and/or electronically coupled modules, at least one of said modules being a module (5) according to any of the previous claims.

9. The system according to claim 8, wherein one or more further modules are selected from a supply module (3), a synthesis module (4), an analysis module (6), a collection module (7), a control module (8) and a user interface module (9).

10. A method for separating an analyte (201) from a contaminant (202), the method comprising:
a) flowing a liquid comprising the analyte (201) and the contaminant (202) through the fluidic channel (31) of a module (5) as defined in any of claims 1 to 7; and
b) operating the plurality of electrodes (43, 44) so as to
- realize both the attractive force and the repulsive force acting on the target particle (20), and
- tune the attractive force and/or repulsive force so that the forces acting on the target particle (20) create a local potential minimum at one of the capture sites (71), thereby capturing the target particle (20) at said capture site,
wherein the target particle (20) is either the analyte (201) or the contaminant (202).

11. The method according to claim 10, further comprising:
c) releasing and collecting the target particle (20).

12. The method according to any of claims 10 to 11, wherein
- the target particle (20) is the analyte (201) and the concentration of the analyte (201) is lower than that of the contaminant (202), or
- the target particle (20) is the contaminant (202) and the concentration of the contaminant (202) is lower than that of the analyte (201).

13. The method according to any of claims 10 to 12, wherein step b comprises generating a non-uniform electric field such that the attractive force is an attractive dielectrophoretic force acting on the target particle (20).

14. The method according to any of claims 10 to 13, wherein the repulsive force is between the target particle (20) and an electric double layer (54) formed near the electrodes (43, 44).

15. The method according to any of claims 10 to 14, wherein step b comprises tuning the attractive force and/or repulsive force near two or more capture sites (71) to capture a dissimilar target particle (20) at each capture site.
